# EUROPEAN PATENT SPECIFICATION

(11) **EP 0 515 333 B1**
(45) Date of publication and mention of the grant of the patent: **29.03.1995**
(21) Application number: 92830250.4
(22) Date of filing: 22.05.1992
(51) Int. Cl.: B23D 47/04, B27G 19/02

(54) **Sawing machine used to cut trunks of firewood**
Baumstammbrennholzsägemaschine
Machine de sciage à couper des troncs en bois de chauffage

(30) Priority: 24.05.1991 IT FI910121
(43) Date of publication of application: 25.11.1992
(73) Proprietor: Andreucci, Franco, I-50026 San Casciano (FI) (IT); Canzani, Roberto, I-50018 Scandicci (FI) (IT)
(72) Inventor: Andreucci, Franco, I-50026 San Casciano (FI) (IT); Canzani, Roberto, I-50018 Scandicci (FI) (IT)
(74) Representative: Fiammenghi, Carlo

(56) References cited:
- DE-C- 854 255
- GB-A- 393 005
- GB-A- 2 236 707
- US-A- 2 864 416

## Description

The present invention relates to a sawing machine according to the precharacterising part of claim 1 used to cut trunks of firewood, capable of cutting trunks in more than one piece, the pieces having a length at most equal to a maximum predetermined length, the trunks being feeded to the machine.

A sawing machine of this kind is known from the Italian patent application No. FI/91/A/121 of the same applicant. It comprises: a supporting frame; a drum, moving idle inside said frame around a horizontal axis and provided with arcuate arms capable of receiving trunks previously cut to a maximum predetermined length, and a pair of dragging belts associated to the drum which revolve around pulleys mounted on arms facing the drum, so that a segment of said belts between two pulleys is held in contact with a sector of the periphery of said drum, in order to let the trunks adhere to the drum, the trunks being located on said arcuate arms; the sawing machine further comprises a rotating-blade device placed in a sawing region, which is located above said drum on mutually parallel axes. The advancing of the dragging belts causes the rotation of the drum, and feeds the trunks which are held by the drum to said sawing region, and finally the trunks are cut by the rotating-blade device, the blades rotating around parallel spaced axes.

The above mentioned sawing machine has some disadvantages, even if it performs an effective cutting of the trunks.

The above mentioned drum, moved by the dragging belts, causes only an angular translation of the trunks towards the sawing region, and therefore the machine has a semi-automatic behaviour, since an operator has to be present in order to feed the trunks to the drum and to remove them from the drum after cutting.
The belts do not allow to hold the trunks adequately, they slide on the drum, and therefore they do not allow a constant rotation of the drum which performs the translation. Furthermore, the drum is made of only one piece and it carries on its periphery arcuate arms which are wire-shaped and have a fixed orientation, it therefore doesn't guarantee the reception of trunks with length and diameter different from the predetermined ones, and this limits noticeably the effectiveness of the above mentioned sawing machine.

The main object of the present invention is to eliminate the above mentioned disadvantages.
This object is attained by providing a sawing machine which cuts trunks of firewood, the machine being of the above mentioned kind, and comprising, as defined in the first of the following claims, a drum consisting of at least two half-drums which are coupled in a sliding manner to each other, each half-drum comprising a circular plate which is connected on its periphery with arcuate arms equally spaced around it, the arms projecting from the periphery and consisting of a single piece having a saw-toothed ramp facing the concavity of the arcuate arm; a ring is fixed to each plate, having the same diameter and facing the plate, and to the ring there are welded saw-toothed ramps, which are identical and located in the same position as the saw-toothed ramps of the circular plates. Preferably, the arcuate arms and the saw-toothed ramps can be variably tilted with respect to the diametral direction of the drum.
Advantageously, the drum is placed in cutout or windows of leading and trailing chute elements, inside the frame. The invention is described in more detail in the following, with reference to a preferred embodiment, reference being made to the annexed drawings.

Fig. 1 is a perspective view of a sawing machine for trunks, according to the present invention.

Fig. 2 is an exploded perspective view of the stationary parts of the sawing machine of Fig. 1.

Fig. 3 is a perspective view of the angular translation device of the trunks of the sawing machine of Fig. 1.

Fig. 4 is an exploded perspective view of a drum comprised in the angular translation device of the trunks, shown in Fig.3.

Fig. 5 is a perspective view of the cutting device of the sawing machine of Fig. 1.

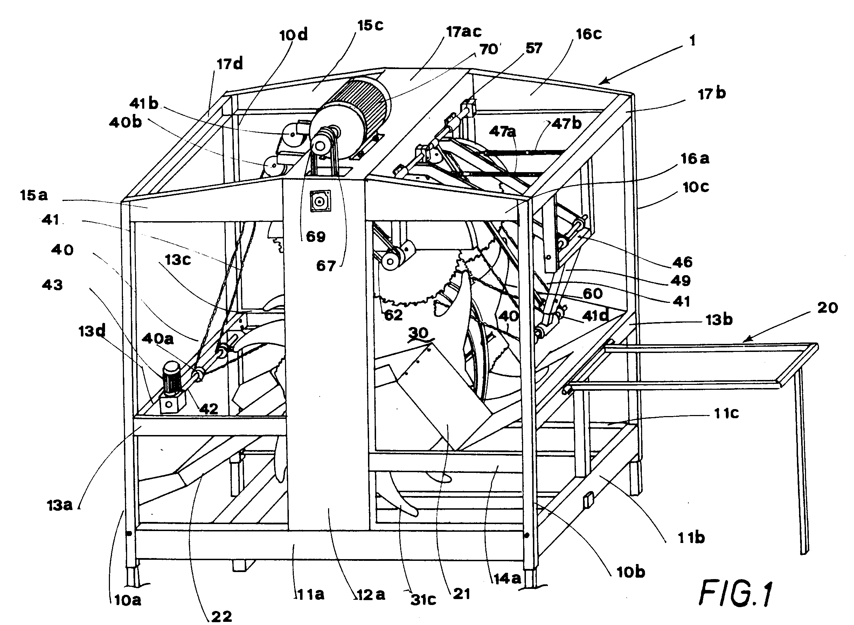

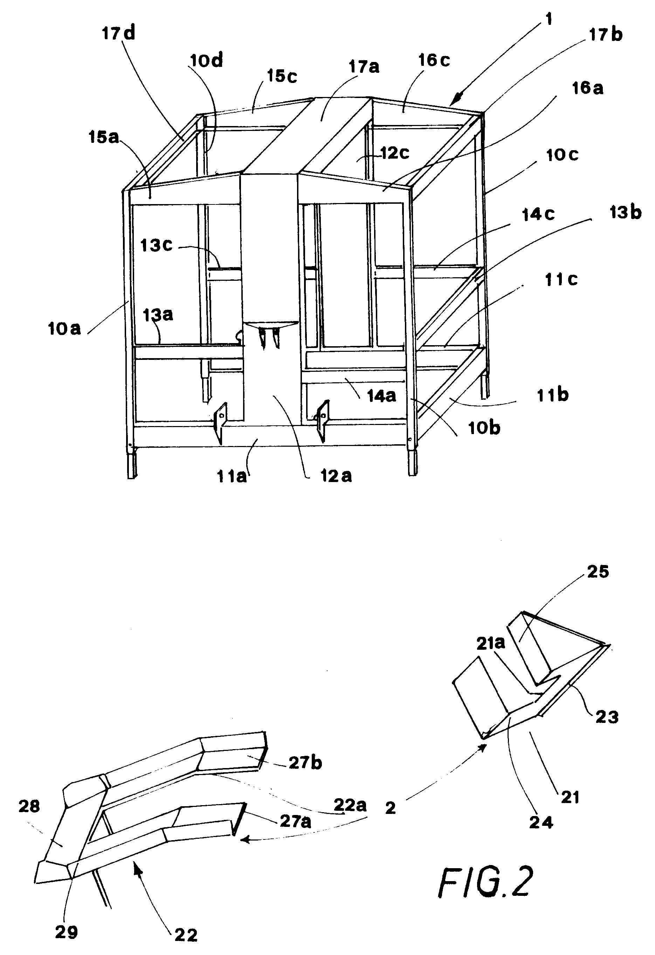

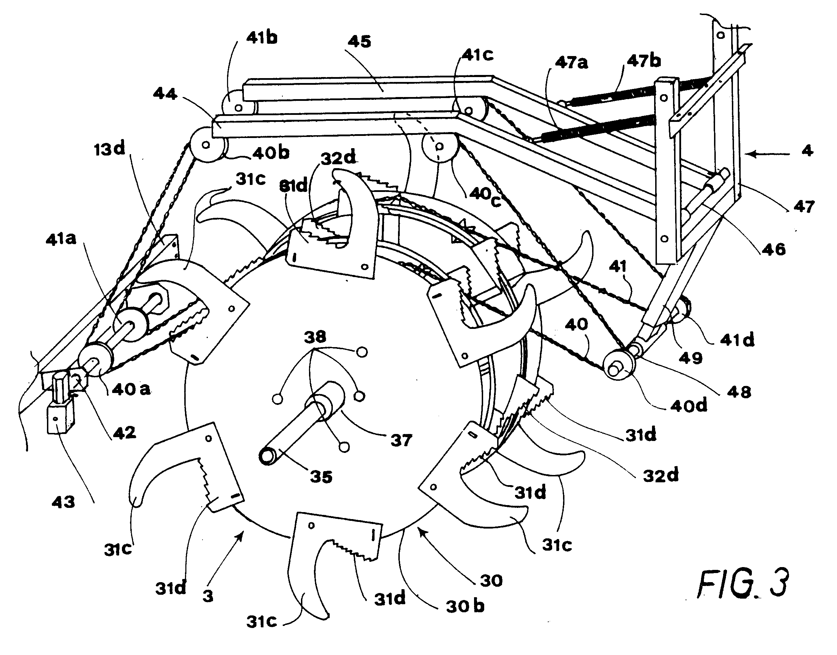

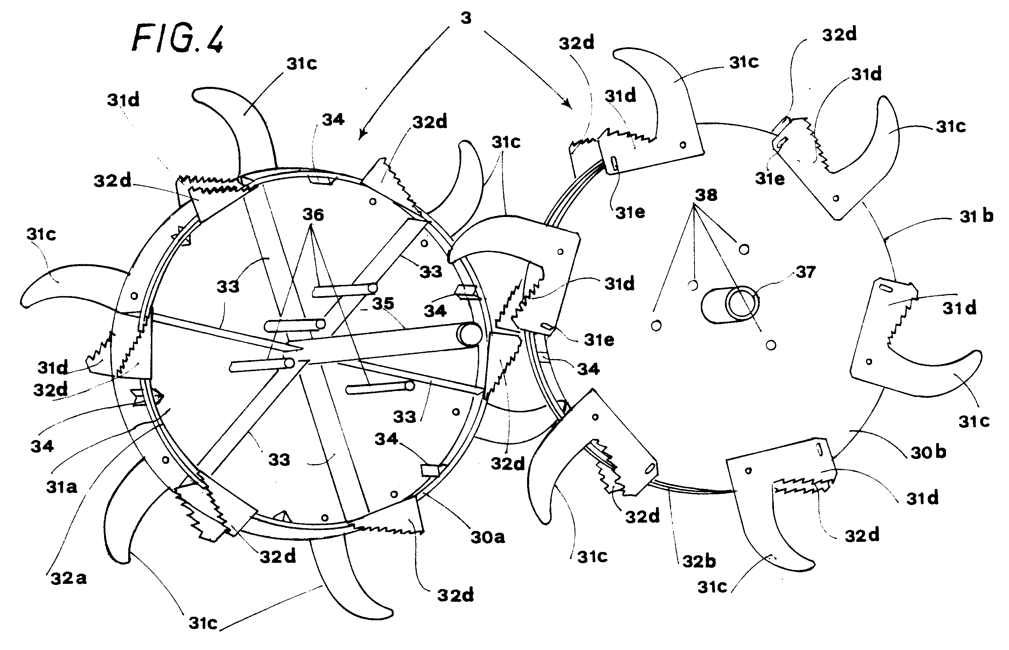

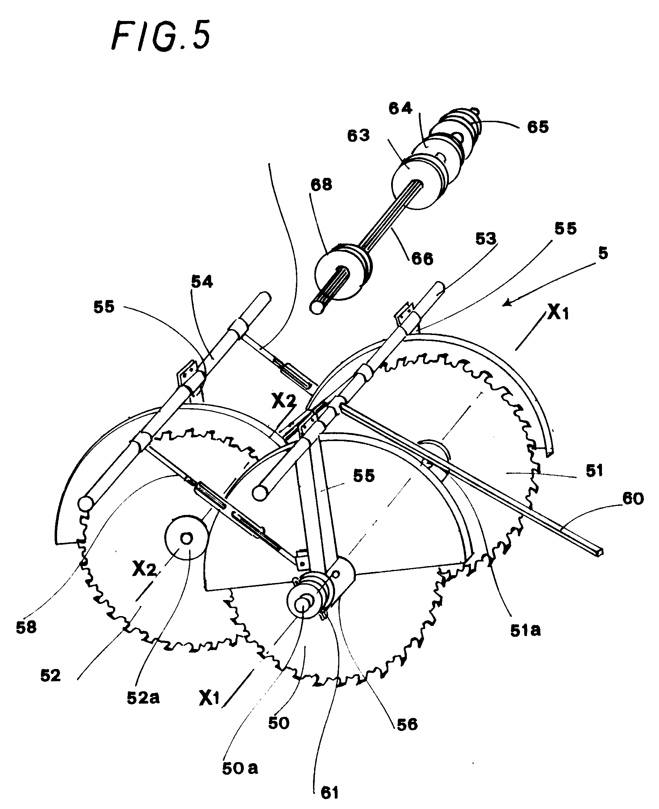

In the drawings, reference numeral 1 indicates a frame of the machine, having inside it, stationary means 2 for feeding trunks, and a drum 3 for the angular translation of the trunks to be cut; reference numeral 4 indicates a device for rotating the drum 3, and 5 indicates a cutting device in a sawing region, contained inside frame 1.
Frame 1, best shown in Fig. 2, comprises vertical rods 10a, b,c,d with ends resting on the ground, cross members 11a,b,c, central vertical rods 12a,c, intermediate lateral cross members 13a, 14a and 13c, 14c, intermediate leading and trailing cross members 13b, 13d, upper lateral cross members 15a, 16a and 15c, 16c, upper leading, central and trailing cross members 17b, 17ac, 17d. Between the vertical rods and the cross members are disposed walls of metallic nets and other protection elements to prevent injury, which are not shown.
In place of the ends or feet, the vertical rods 10a,b,c,d may carry wheels (not shown) to enable the transport of the machine to the working place.
Fixed (i.e. stationary) feeding means for the trunks are connected to frame 1, the trunks being already cut to a length which is suited to the machine, in order to be cut in various pieces.
These fixed or stationary means comprise, on the front part of frame 1, a supporting plane 20 for the trunks (Fig.1), detachably connected to the intermediate leading cross member 13b. This supporting plane is prolonged into a leading chute element 21 and a traling chute element 22. As best shown in Fig. 2, the loading chute element 21 comprises a leading edge 23 connected to the intermediate leading cross-member 13b, a downwardly inclined plane 24, and an upwardly inclined plane 25. The inclined planes 24, 25 with side walls 26, have a window 21a.
The trailing chute element 22 comprises a pair of downwardly inclined side planes 27a, 27b connected to the leading chute element 21, and a terminal inclined plane 28. The trailing chute element 22 has side walls 29 and a window 22a.
Taken together, the windows 21a and 22a define an interspace apt to receive the movable feeding means.
The movable feeding means comprise a drum 3, which is mounted idle on the center vertical rods 12a, 12c, about a horizontal axis orthogonal to the advancing direction of the trunks.
As best shown in Fig. 4, the drum 3 is formed of two half-drums 30a, 30b, at least, which are coupled against each other in a sliding manner.
Each half-drum 30a, 30b comprises a circular plate 31a, 31b to whose periphery are connected, equally spaced to each other, arcuate arms 31c, which project from the same periphery. Each arcuate arm 31c is preferably formed of a single piece, with a saw-toothed ramp 31d which faces the concavity of the arcuate arm 31c. The ensemble constituted by the arm 31c and the saw-toothed ramp 31d can be adjusted and inclined by means of a slot 31e which allows to vary the inclination as desired.
Facing the circular plate 31a, 31b, there is a ring 32a, 32b having the same diameter. The ring 32a, 32b is connected to the circular plate 31a, 31b by means of radial ribs 33 and other connecting elements as angular segments 34. To the rings, there are welded saw-toothed ramps 32d, which could also be adjusted or inclined, and which are identical and have the same disposition as the saw-toothed ramps 31d of the circular plate 31a, 31b. At the center of the circular plate 31a, a shaft 35 is fixed, and also a plurality of pins 36. Coaxially to said shaft 35 and to said pins 36, there is a sleeve 37 and a plurality of through holes 38 on the circular plate 31b.
By means of the shaft 35 and pins 36 of the circular plate 31a, the plate 31b is supported in a sliding manner on the plate 31a, in such a way as to be unable to rotate one with respect to the other. The fixing (in a conventional non represented manner) of the half-drum 30b on the shaft of the half-drum 30a, gives rise to a drum 3 of variable length, which depends upon the length of the trunks to be cut. Obviously, the size of the windows 21a and 22a of the leading and trailing chute elements is modified in a proportionate manner.
To the drum 3 is associated an actuation device 4 which rotates it and at the same time allows the trunks adhere to the drum, when they are feeded and held on the arcuate arms 31c, also by means of the saw-toothed ramps 31d.
With reference to Fig. 3, the device 4 comprises at least a pair of flexible dragging elements, preferably constituted by chains 40, 41, movable around pulleys 40a, b, c, d and 41 a, b, c, d.
The pulleys 40a, 41a are keyed on a shaft 42, which is supported by the intermediate trailing cross member 13d, and is moved by an electrical motor reducer. The pulleys 40b, c and 41b, c are mounted idle on respective oscillating arms 44, 45 which face the drum 3 in such a way that a segment of said chains 40, 41 is held in contact without grazing with a sector of the drum's periphery.
The arms 44, 45 are pivotally connected on a shaft 46 which is mounted on a supporting frame 47, fixed to the upper leading cross member 17b. The pulleys 40d, 41d are mounted idle to the ends of a cross member 48 which is mounted in a movable manner on an elastically telescopic arm 49, projecting downwardly from frame 47.
The arms 44, 45 are supported upwardly by means of springs 47a, 47b.
By means of the actuation device 4 described above, the dragging chains 40, 41 are engaged with the periphery of the drum 3 without sliding contact, possibly with an interposition of some trunks, along a sector corresponding to about 1/3 of the circumference.
In a sawing region, there is placed a rotating-blade device 5, which is juxtaposed to the drum 3. The rotating-blade device 5 comprises a leading pair of rotating blades 50, 51, rotatable around a first axis X1-X1 parallel to the rotation axis of the drum 3, and a third trailing rotating blade 52, which is rotatable around an axis X2-X2 parallel to said first axis X1-X1. The respective rotation pins 50a, 51a, 52a, disposed along said axes, are appended on supporting rods 53, 54 by means of shaped rods, as the one indicated by numeral 55, and by means of the hub 56 indicated in Fig. 5. The supporting rods 53, 54 are laterally connected to the central upper cross member 17ac with fixing means as that indicated by 57 in Fig. 1.
The supporting rod 53 is further connected by means of tension rods 58, 59 to pins 50a, 51a, whereas the supporting rod 54 is connected through an elongated rod 60 to the telescopic arm 49 of the device 4. Pulleys, for example the one indicated by numeral 61, are keyed to the pins 50a, 51a, 52a, pulley 61 being keyed to pin 50a.
Belts such as 62 move around pulleys such as 61, and respective pulleys 63, 64, 65 keyed on the axis 66, the latter being supported by cross member 17ac and being moved by a belt 67 movable around a pulley 68 (Fig. 5) and a pulley 69 which is keyed on the shaft of an electric motor 70 located above the cross member 17ac (Fig. 1).
The position of the rotating blades 50, 51, 52 is variable along the supporting rods 53, 54, and so the size of the trunks is changed. Either the device 4 with a flexible pair of elements, or the device 5 with rotating blades, can be driven by actuation means different from the above mentioned electric motors, for example by means of endothermic motors or a tractor drive.
The operation of the sawing machine of the present invention is as follows.
The reciprocal distance between the half-drums 30a, 30b is first adjusted in such a way that the arcuate arms 31 will be at a distance in which they are apt to receive the trunks having the desired length and diameter of the trunks to be cut into pieces. The trunks are first laid on the supporting plane 20, and then they are let sliding by pushing them in the direction of the inclined leading plane 24 until they reach the stop element which consists of plane 25, which is upwardly inclined and provided with window 21a, the plane 25 being part of the leading chute element 21. At this moment, the drum 3, which is driven into rotation by means of the dragging chains 40, 41, lifts the trunks which rest on the arcuate arms, until they reach the sawing region, where the leading pair of blades 50, 51 laterally cuts the trunk. The cut pieces reach the lateral parts 27a, 27b of the trailing chute element 22. The central part of the trunk continues to rotate while laying on the drum 3, until it reaches the trailing blade 52, and, after it is cut, it goes down to the terminal part 28 of the trailing chute element 22.

The sawing machine of the present invention has the following advantages:
it may be used by not particularly skilled people; it is versatile, since the shape of the firewood to be cut may not be uniform, the trunks may for example be curved;
it is safer, with respect to actual machines used to cut trunks (belt saws or disc saws), which have no protection from the cutting parts; for what concerns the capacity of output, the machine of the present invention is more efficient than conventional machines, for the same number of working people.

The invention may be modified and presented in different variants thereof, which are all included in the same inventive concept without departing from the scope of the claims. All details may be replaced by mechanical equivalents without from departing the same inventive concept as claimed.

## Claims

1. Sawing machine used to cut trunks of firewood, comprising:
- a supporting frame (1);
- movable feeding means inside said frame, for feeding trunks into a sawing region of the machine, comprising a drum (3), moving idle around a horizontal axis orthogonal to the advancing direction of the trunks and having on its outer periphery arcuate arms apt to hold said trunks, at least a pair of flexible dragging elements which are moved around pulleys which are arranged on arms facing the drum, so that a segment of said flexible elements between two pulleys is held in contact without grazing with a sector of the periphery of said drum in said sawing region, in order to let the trunks adhere to the drum, while they are laying on said arcuate arms;
- a rotating blades device (5) which is arranged in said sawing region, juxtaposed to said drum along mutually parallel axes which are orthogonal with respect to the feeding direction of the trunks;
characterized in that
- said drum (3) is formed of at least two half-drums (30a, 30b), coupled to each other in a sliding manner, each half-drum (30a, 30b) having a circular plate (31a, 31b), to whose periphery are connected, angularly spaced from each other, projecting arcuate arms (31c), consisting of a single piece and having a saw-toothed ramp (31d) which faces the concavity of the arcuate arm (31c);
- a ring (32a, 32b) being fixed to each circular plate (31a, 31b) and facing the same, the ring having the same diameter as the plate and being provided with saw-toothed ramps (32d) welded on it, said ramps (32d) being identical in shape and arrangement to the saw-toothed ramps (31d) of the circular plates (31a, 31b).

2. Sawing machine according to claim 1, characterized in that at the center of one of said circular plate (31a) a shaft (35) is attached, together with a plurality of pins (36), arranged coaxially with respect to a sleeve (37) and a plurality of through holes (38) on the other circular plate (31b).

3. Sawing machine according to claim 1, characterized in that the ensemble which consist of the arcuate arm (31c) and saw-toothed ramp (31d) is adjustable and can be inclined by means of a slot (31e).

4. Sawing machine according to claim 1, characterized in that said pair of flexible dragging elements is a pair of chains (40, 41).

5. Sawing machine according to claim 1, characterized in that said drum (3) is arranged in windows (21a, 22a) of leading and trailing chute elements (21, 22), which are stationary feeding means, the leading chute element (21) comprising a downwardly inclined plane (24) and an upwardly inclined plane (25), the trailing chute element (22) comprising a pair of downwardly inclined side planes (27a, 27b), connected to the leading chute element (21), and a terminal inclined plane (28); said stationary means comprising further on the front side of the machine, a supporting plane (20) which is detachably connected to the intermediate leading cross member (13b), on the outside of frame 1.

6. Sawing machine according to claim 1, characterized in that said rotating-blade device (5) comprises adjustable blades.

7. Sawing machine according to claim 1, characterized in that said supporting frame comprises side walls in the form of nets preventing injury.

## Patentansprüche

1. Baumstammbrennholzsägemaschine, mit
- einem Tragrahmen (1);
- bewegbaren Fördermitteln innerhalb dieses Rahmens, um die Baumstämme zu einer Sägestation der Maschine zu transportieren, die eine Trommel (3) aufweist, welche um eine horizontale Achse senkrecht zur Vorschubrichtung der Baumstämme leerlaufen kann, wobei diese Trommel gekrümmte Arme auf ihrem Umfang aufweist, welche die Baumstämme halten, und wobei ferner mindestens ein Paar flexible Mitnehmerelemente vorhanden ist, die durch Riemenscheiben bewegt werden, welche auf Achsen montiert sind die der Trommel gegenüberliegen, so daß ein Teil dieser flexibeln Mitnehmerelemente zwischen zwei Riemenscheiben auf einem Sektor des Umfangs der genannten Trommel in der Sägestation aufliegt, ohne darauf gleiten zu können, mit der Folge, daß die Baumstämme fest gegen die Trommel gedrückt werden, während sie auf den genannten gekrümmten Armen aufliegen;
- einer rotierenden Sägeblattvorrichtung (5) die in dieser Sägestation angeordnet ist, nahe dieser Trommel, wobei die betreffenden Achsen zueinander parallel und senkrecht zur Vorschubrichtung der Baumstämme liegen;
dadurch gekennzeichnet daß
- diese Trommel (3) aus mindestens zwei Halbtrommeln (30a, 30b) besteht, die gleitend miteinander gekoppelt sind, und jede Halbtrommel (30a, 30b) eine kreisförmige Platte (31a, 31b) besitzt auf deren Umfang vorstehende, mit Winkelabstand voneinander angeordnete, gekrümmte Arme (31c) vorhanden sind, welche einstückig geformt und als sägezahnförmige mit der Konkavität des gekrümmten Arms (31c) angrenzende Rampe (31d) ausgebildet sind; wobei auf jede kreisförmige Platte (31a, 31b) ein Ring (32a, 32b) mit dem selben Durchmesser befestigt ist, auf den sägezahnförmige Rampen (32d) geschweißt worden sind; die sägezahnförmige Rampen (32d) sind gleich ausgebildet und angeordnet wie die den kreisförmigen Platten (31a, 31b) zugeordneten sägezahnförmigen Rampen (31d).

2. Sägemaschine nach Anspruch 1, dadurch gekennzeichnet, daß im Zentrum einer dieser kreisförmigen Platte (31a), ein Schaft (35), und eine Reihe von Stiften (36), koaxial zu einem Stutzen (37), bzw. zu einer Reihe von durchgehenden Bohrungen (38) in der anderen kreisförmigen Platte (31b), befestigt sind.

3. Sägemaschine nach Anspruch 1, dadurch gekennzeichnet, daß die Gesamtheit aus dem gekrümmten Arm (31c) und der sägezahnförmigen Rampe (31d) neigbar und einstellbar ist, mittels des Langlochs (31e).

4. Sägemaschine nach Anspruch 1, dadurch gekennzeichnet, daß das Paar von flexibeln Mitnehmerelementen aus ein Paar Ketten (40, 41) besteht.

5. Sägemaschine nach Anspruch 1, dadurch gekennzeichnet, daß die Trommel (3) in Durchbrechungen (21a, 22a) von vorderen und hinteren Rutschen (21, 22) angeordnet ist, die stationäre Fördermittel bilden, wobei die vordere Rutsche (21) eine nach unten geneigte Ebene (24) und eine nach oben geneigte Ebene (25) aufweist, und die hintere Rutsche (22), ein Paar von nach untern geneigten Seitenebenen (27a, 27b) besitzt, die mit der vorderen Rutsche (21) verbunden sind, und dazu eine geneigte Endebene (28); wobei die stationären Fördermittel auch eine vordere Auflageebene (20) umfaßen, die lösbar - außerhalb des Rahmens 1 - mit dem mittleren vorderen Querbalken (13b) verbunden ist.

6. Sägemaschine nach Anspruch 1, dadurch gekennzeichnet, daß die rotierende Sägeblattvorrichtung (5) einstellbare Sägeblätter besitzt.

7. Sägemaschine nach Anspruch 1, dadurch gekennzeichnet, daß der genannte Tragrahmen oder Gestell mit Seitenwänden ausgebildet ist, welche aus Netzen zur Unfallverhütung bestehen.

## Revendications

1. Machine de sciage à couper des troncs en bois de chauffage comprenant:
- un bâti de support (1);
- des moyens mobiles d'alimentation installés à l'intérieur dudit bâti de support pour alimenter des troncs dans une région de sciage de la machine, comprenant un tambour (3) qui tourne sans contrainte autour d'un axe horizontal perpendiculaire à la direction d'avance des troncs et muni, sur sa périphérie, de bras courbés aptes à supporter les troncs, et au moins un couple d'éléments flexibles de traînement associés au tambour, qui avancent sur des poulies installées sur des bras tournés vers le tambour de sorte qu'une portion desdits éléments flexibles entre les deux poulies reste en contact sans frottement, avec un secteur de la périphérie dudit tambour dans la région de sciage susdite, àfin de maintenir les troncs adhérents au tambour quand ils sont placés sur les bras courbés;
- un dispositif à lames tournantes (5) placé dans la région de sciage susdite, juxtaposé au tambour selon des axes mutuellement parallèles qui sont perpendiculaires à la direction d'alimentation des troncs;
caractérisé en ce que
- le tambour (3) est constitué par au moins deux demitambours (30a, 30b), qui peuvent avoir un accouplement coulissant, chaque demi-tambour (30a, 30b) ayant une plaque circulaire (31a, 31b) à la périphérie desquelles sont reliés, à une distance angulaire l'un de l'autre, des bras courbés saillants (31c) réalisés en monobloc avec une partie en dents de scie (31d) donnant sur la concavité du bras courbé (31c); un anneau (32a, 32b) étant fixé sur chaque plaque circulaire (31a, 31b), l'anneau ayant le même diamètre que la plaque et étant soudé à des parties en dents de scie (32d), dites parties (32d) ayant la même forme et le même rangement que les parties en dents de scie (31d) des plaques circulaires (31a, 31b).

2. Machine de sciage selon la Revendication 1, caractérisée en ce qu'au centre d'une des plaques circulaires (31a) susdite sont fixés un arbre (35) et une série de pivots (36) formés sur le même axe qu'un manchon (37) et une série de trous (38) débouchant dans l'autre plaque circulaire (31b).

3. Machine de sciage selon la Revendication 1, caractérisée en ce que l'ensemble du bras 31c et de la partie en dents de scie 31d peut être inclinée et réglée par une boutonnière 31e.

4. Machine de sciage selon la Revendication 1, caractérisée en ce que ledit couple d'éléments flexibles de traînement est constitué par un couple de chaînes (40, 41).

5. Machine de sciage selon la Revendication 1 caractérisée en ce que le tambour (3) est placé dans des ouvertures (21a, 22a) d'éléments de glissement antérieur et postérieur (21, 22), qui représentent des moyens fixes d'alimentation, l'élément de glissement antérieur (21) comprenant un plan incliné descendant (24) et un plan incliné montant (25), l'élément de glissement postérieur (22) comprenant un couple de plans latéraux inclinés descendants (27a, 27b) reliés à l'élément de glissement antérieur (21), et un plan incliné terminal (28); les moyens fixes susdits comprenant aussi antérieurement un plan d'appui (20) qui est relié d'une façon amovible au barreau intermédiaire antérieur (13b), à l'extérieur du bâti (1).

6. Machine de sciage selon la Revendication 1, caractérisée en ce que le dispositif à lames tournantes (5) comprend des lames réglables.

7. Machine de sciage selon la Revendication 1, caractérisée en ce que le bâti de support comprend des parois latérales en filet de protection contre les accidents.
